# EUROPÄISCHE PATENTSCHRIFT

(11) **EP 3 238 988 B1**
(45) Veröffentlichungstag und Bekanntmachung des Hinweises auf die Patenterteilung: **15.07.2020**
(21) Anmeldenummer: 17167687.7
(22) Anmeldetag: 24.04.2017
(51) Int. Cl.: B60R 22/18, B60N 2/68, B60N 2/01, B60N 2/42, B60R 22/24, B60R 22/28, B60N 2/24

(54) **VORRICHTUNG ZUR ANORDNUNG EINES PERSONENRÜCKHALTESYSTEMS**
DEVICE FOR ARRANGING A PERSON RETENTION SYSTEM
DISPOSITIF D'AGENCEMENT D'UN SYSTÈME DE RETENUE DE PERSONNE

(30) Priorität: 25.04.2016 DE 102016107639; 22.09.2016 DE 102016117888
(43) Veröffentlichungstag der Anmeldung: 01.11.2017
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- DE-A1-102014 003 966
- DE-U1- 9 320 333

## Beschreibung

Die Erfindung betrifft eine Vorrichtung zur Anordnung eines Personenrückhaltesystems in einem Verkehrsmittel nach dem Anspruch 1, eine Personensitzanordnung nach Anspruch 12, sowie ein Verkehrsmittel nach Anspruch 13.

### Stand der Technik

Vorrichtungen zur Anbringung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes in Verkehrsmitteln.

In Verkehrsmitteln beispielsweise Fahrzeugen, wie z.B. Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

DE-A-102014003966 beschreibt eine Vorrichtung zur Anordnung eines Personenrückhaltesytems in einem Verkehrsmittel.

### Aufgaben und Vorteile der Erfindung

Aufgabe der vorliegenden Erfindung ist es, eine Vorrichtung der einleitend bezeichneten Art bereitzustellen, welche technisch und wirtschaftlich vorteilhaft ausgebildet ist. Insbesondere sollen Stabilitätskriterien bzw. Sicherheitsvorgaben herstellungstechnisch vorteilhaft erfüllbar sein.

Diese Aufgabe wird durch den unabhängigen Anspruch 1 gelöst. Die abhängigen Ansprüche betreffen vorteilhafte und zweckmäßige Weiterbildungen der Erfindung.

Die Erfindung geht von einer Vorrichtung zur Anordnung eines Personenrückhaltesystems in einem Verkehrsmittel aus, um mit dem Personenrückhaltesystem eine in dem Verkehrsmittel sitzende Person zu sichern, wobei die Vorrichtung eine Stützanordnung mit einer Vertikalstütze umfasst, welche in einem Bodenbereich des Verkehrsmittels aufrecht stehend fixierbar ist, und wobei insbesondere an der Vertikalstütze eine längliche Querstrebe aufgenommen ist, die winklig zur Vertikalstütze ausgerichtet ist.

Eine solche Vorrichtung ist insbesondere als eine Vorrichtung in der Art eines rahmenartigen Gestells ausgebildet, umfassend Freilassungen, die von parallel und winklig zueinander ausgerichteten, miteinander verbundenen, länglichen Profileelementen umrahmt sind. Die Profilelemente bestehen vorzugsweise aus einem metallischen Material.

Die Vorrichtung zur Anordnung des Personenrückhaltesystems in dem Verkehrsmittel ist vorzugsweise derart ausgelegt und ausgebildet, in dem Verkehrsmittel, beziehungsweise in einem Kraftfahrzeug, an einem Bodenabschnitt befestigt zu werden. Bevorzugt so, dass die Befestigung der Vorrichtung allein an dem Bodenabschnitt beispielsweise an einer Bodenplatte im Verkehrsmittel lösbar oder unlösbar fixierbar ist, zum Beispiel anschraubbar, klebbar und/oder verschweißbar.

Die erfindungsgemäße Vorrichtung ist vorzugsweise als Basisgestell beziehungsweise als Gurt- und Sitzgestell ausgebildet, insbesondere in der Art einer Grundstruktur für eine Sitzanordnung im Verkehrsmittel, beziehungsweise für eine Fahrzeugsitzanordnung.

An der im Fahrzeug eingebauten Vorrichtung sind vorzugsweise Komponenten des Personenrückhaltesystems beziehungsweise der Sicherheitsgurtanordnung und des Sitzes anbringbar. Derartige Komponenten umfassen zum Beispiel einen, an einem ersten Ende eines Sicherheitsgurts angreifenden Gurtaufroller, eine Gurtumlenkanordnung zur Richtungsänderung des daran vorbeigeführten Gurts, eine Fixierung für ein zweites Gurtende und ein Gurtschloss, an dem ein Einsteckteil, mit welchem der Gurt als Schlaufe ausziehbar ist, lösbar einrastbar ist. Als Sicherheitsgurtanordnungen kommen insbesondere Zweipunkt- oder andere Mehrpunkt-Gurtsysteme, beispielsweise Dreipunkt-Gurtsysteme in Frage.

Die vorgeschlagene Vorrichtung muss konstruktiv bzw. mechanisch ausgelegt sein, um einer maximal mögliche Belastung, insbesondere bei dynamischen Belastungsvorgängen, einen ausreichenden Widerstand entgegensetzen zu können, also entsprechende Kräfte und Momente aufnehmen und/oder weitergeben zu können.

Dies ist Voraussetzung zur Erhaltung der Sicherheit und damit Gesundheit einer Person, welche mit einer Sicherheitsgurtanordnung sicherbar ist, wobei die Sicherheitsgurtanordnung an der im Verkehrsmittel fixierten Vorrichtung aufgenommenen ist, samt Komponenten eines entsprechenden Personensitzes. Die Vorrichtung ist demgemäß vorzugsweise so ausgestaltet, eine innere Gerüststruktur eines fest in einem Verkehrsmittel installierten Personensitzes zu bilden.

Beispielsweise besitzt die Vorrichtung in einer Personensitzausbildung mit einem Sitzplatz eine einzige Vertikalstütze. Für eine vergleichsweise höhere Stabilität der Vorrichtung, z.B. für eine erweiterte Einsatzmöglichkeit für einen Personensitz mit zwei oder mehr Sitzplätzen, kann die Vorrichtung zum Beispiel genau zwei parallele Vertikalstützen umfassen, die vorzugsweise identisch aufgebaut sind. Beide Vertikalstützen sind bevorzugt mit der einen Querstrebe verbunden. Die Vorrichtung kann ggf. auch zwei oder mehr vorzugsweise gleichartige Querstreben aufweisen, welche mit der einen oder mit den mehreren Vertikalstützen verbunden sind. Vorzugsweise umfasst die erfindungsgemäße Vorrichtung genau zwei parallele Vertikalstützen und genau eine Querstrebe.

Bei zwei oder mehr Vertikalstützen sind die Vertikalstützen voneinander lateral, beziehungsweise seitlich, z.B. horizontal voneinander beabstandet. Gegebenenfalls kann im Fußbereich der Vertikalstützen eine Verbindung der Vertikalstützen miteinander vorhanden sein, über welche z.B. auch die Fixierung am Bodenbereich des Verkehrsmittels einrichtbar ist.

Die Querstrebe ist vorzugsweise durchgehend und steht bevorzugt an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein insbesondere horizontaler Abstand der beiden Vertikalstützen.

Bei einer typischen erfindungsgemäßen Vorrichtung mit zwei senkrecht im Verkehrsmittel aufstellbaren Vertikalstützen und z.B. einer horizontal gerichteten Querstrebe beträgt die Länge der Vertikalstützen bzw. die Höhe im montierten Zustand etwa 1,10 Meter bis ca. 1,30 Meter. Die Vertikalstützen sind beispielsweise über einen Abstand von z.B. ca. 30 bis 90 Zentimeter voneinander seitlich beabstandet. Insbesondere sind die Vertikalstützen z.B. über einen Abstand zwischen 30 und 40 Zentimeter oder z.B. über einen Abstand zwischen 70 und 90 Zentimeter voneinander beabstandet vorhanden. Eine Länge der Querstrebe liegt bevorzugt bei ca. 70 bis 90 Zentimeter. Beispielsweise bilden die Vertikalstützen einen äußeren Abschluss der Querstreben, die Vertikalstützen sind somit z.B. außen an den Querstreben angeordnet.

Der wesentliche Aspekt der Erfindung liegt nun darin, dass die Vertikalstütze und/oder die Querstrebe als Mehrfach-Hohlprofilelement aufgebaut sind, wobei das Mehrfach-Hohlprofilelement über seine zumindest wesentliche Erstreckung zwei miteinander längsseitig verbundene Hohlkörper umfasst.

Eine weitere vorteilhafte Ausbildung der Erfindung ist, dass die Vertikalstütze und/oder die Querstrebe als Hohlprofilelement ausgestaltet ist, wobei in einem Innenraum eines Hohlkörpers des Hohlprofilelements entlang einer Längserstreckung ein Profil zur Verstärkung der Vertikalstütze und/oder der Querstrebe eingeschoben und lagefixiert ist.

Im eingebauten Zustand der Vorrichtung im Verkehrsmittel entspricht die relevante Belastungsrichtung in der Regel einer Sitzrichtung der gesicherten Person bzw. der Fahrrichtung des Verkehrsmittels bzw. des Fahrzeugs. Bei einem Fahrzeug tritt eine maximale Belastung, z.B. bei einem Aufprall des fahrenden Fahrzeugs gegen ein Hindernis, z.B. einem Crashfall, auf. Aufgrund der abgebremsten bewegten Masse der im Fahrzeug sitzenden und gesicherten Person wird über die Sicherheitsgurte des Personenrückhaltesystems eine ruckartig wirkende Zugkraft bzw. ein daraus resultierendes Moment in Belastungsrichtung bzw. in Fahrrichtung an der erfindungsgemäßen Vorrichtung und damit an der Vertikalstütze bzw. der Querstrebe der Vorrichtung wirksam.

Ein wesentlicher Anteil dieser Belastung wird vorteilhaft an einer Verstärkungsstelle bzw. einem Wirkbereich, an welcher der Hohlkörpers durch das Profil verstärkt bzw. stabilisiert ist, aufgenommen, ohne dass diese sich wesentlich bzw. sodass diese sich ausschließlich in einem insbesondere sicherheitstechnisch tolerierbaren Maß plastisch verformt.

Durch die vorteilhafte Ausgestaltung der Erfindung ist eine Doppelung insbesondere einer Wandung an der Verstärkungsstelle des Hohlprofilelements, insbesondere an einer Wirkposition im Wirkbereich, erreicht, wodurch eine Stabilität des Hohlprofilelements, insbesondere eine Stabilität des Wirkbereichs, vorteilhaft erhöht ist. Z.B. ist bezogen auf bekannte Vorrichtungen eine höhere mechanische Stabilität möglich, bei gleichen Abmessungen bzw. ohne dass die erfindungsgemäße Vorrichtung gegenüber bekannten Vorrichtungen größere Abmessungen bzw. Außenmaße der Vorrichtung bzw. der Vertikalstütze und/oder der Querstrebe aufweist.

Vorzugsweise stimmt die Außenabmessung des, mit einem Profil verstärkten Hohlkörpers der Vertikalstütze bzw. der Querstrebe mit der Außenabmessung bekannter Vertikalstützen und Querstreben überein. Damit können auf bisher genutzte Vorrichtungen abgestimmte Komponenten des Personenrückhaltesystems bzw. der Personensitzanordnung vorteilhaft in unveränderter Form an der erfindungsgemäßen Vorrichtung wie bislang angebracht werden, so dass kein Zusatzaufwand nötig wird. Auch die Einbindung der erfindungsgemäßen Vorrichtung in dem Verkehrsmittel, zum Beispiel an Befestigungsstellen, die ggf. auf bisherige Vorrichtungen abgestimmt im Bodenbereich des Verkehrsmittels vorbereitet sind, kann bei der erfindungsgemäßen Vorrichtung wie bisher erfolgen.

Ein weiterer Vorteil der Erfindung ist darin zu sehen, dass gegenüber bekannten Vorrichtungen bei der vorgeschlagenen Vorrichtung sich mit vergleichbarem oder gegebenenfalls nur geringfügig höherem Materialeinsatz signifikant höhere Stabilitätswerte realisieren lassen. Vorzugsweise weist das Hohlprofilelement der Vertikalstütze und/oder der Querstrebe konkret die gleichen oder zumindest nahezu gleichen Außenmaße auf, wie die Außenmaße von bisher verwendeten Vertikalstützen bzw. Querstreben.

Bei einer, zu bekannten Vorrichtungen vergleichbaren Stabilität kann die erfindungsgemäße Vorrichtung gegebenenfalls mit geringeren Abmessungen der Vertikalstütze bzw. der Querstrebe und damit mit einem geringeren Materialeinsatz bzw. mit geringerem Gewicht bereitgestellt werden.

Typische Breitenmaße bzw. Seitenmaße des runden, ovalen, elliptischen, rechteckigen oder quadratischen Querschnitts des Hohlprofilelements bzw. des Hohlkörpers beträgt ca. 20 bis 60 Millimeter, insbesondere ca. 30 bis 40 Millimeter. Eine Wanddicke eines Hohlprofilelements bzw. eines Hohlkörpers liegt in der Regel im einstelligen Millimeterbereich.

Vorzugsweise ist das Hohlprofilelement so ausgebildet, dass die Masse der erfindungsgemäß verstärkten Vertikalstütze bzw. Querstrebe gleich oder nur vergleichsweise gering höher ist, als die Masse bisheriger Vertikalstützen bzw. Querstreben bei Erfüllung der Vorgaben für den gleichen Einsatzzweck.

Für eine flexible Gestaltung der Vorrichtung kann wahlweise nur die eine oder die mehreren Vertikalstützen und/oder nur die eine oder die mehreren Querstreben in einem Innenraum eines Hohlkörpers des Hohlprofilelements der Vertikalstütze und/oder der Querstrebe mit einem Profil zur Verstärkung versehen sein.

Des Weiteren ist es vorteilhaft, dass der Hohlkörper und das Profil längsseitig miteinander verbunden sind.

Vorteilhafterweise ist ein Hohlprofilelement, ein Hohlkörper und/oder ein Profil durch mehrfaches Umbiegen eines flachen Blechmaterials gebildet. Jeder Hohlkörper weist eine Hohlkörperwand auf, welche über die Länge des Hohlkörpers zum Hohlraum des Hohlkörpers vorzugsweise durchgehend umfänglich geschlossen ist, zum Beispiel als Rohr- bzw. Hohlprofil.

Der Hohlkörper und/oder das Profil ist vorzugsweise als ein Mehrkant-Rohr bzw. ein Mehrkant-Hohlkörper, z.B. als ein Hohlprofil, ausgebildet. Der Hohlkörper kann alternativ auch ein Rohr mit rundem oder elliptischem oder einem anderen Querschnitt mit gebogen verlaufenden Abschnitten sein. Das Profil kann leistenartig vorhanden sein, z.B. als einfacher Blechstreifen. Das Profil kann aber auch als Mehrkant-Profil, z.B. als L-Profil, U-Profil oder auch T-Profil ausgebildet sein.

Jeder Hohlkörper des Hohlprofilelements besitzt vorzugsweise einen Hohlraum, welcher sich in Längsrichtung des Hohlkörpers erstreckt, und welcher vorzugsweise mit der Längsrichtung des Hohlprofilelements bzw. der Vertikalstütze und/oder der Querstrebe zusammenfällt. Die Vertikalstütze und/oder die Querstrebe kann auch ein Hohlprofilelement mit mehreren Hohlkörpern oder Hohlkörperabschnitten umfassen. Insbesondere kann die Vertikalstütze und/oder die Querstrebe mehrere Hohlprofilelemente umfassen.

Vorteilhafterweise ist eine Außenkontur des Profils insbesondere passgenau auf eine Innenkontur des Hohlkörpers abgestimmt. Das Profil lässt sich z.B. formschlüssig in den Hohlraum des Hohlkörpers einschieben. Als Außenkontur des Profils ist beispielsweise eine Außenkontur eines Querschnitts des Profils zu verstehen, welcher insbesondere senkrecht zu einer Längsachse des Hohlkörpers vorhanden ist.

Überdies ist es bevorzugt, dass der Hohlkörper und/oder das Profil erste gegenüberliegende Hohlkörperwandungen und zweite gegenüberliegende Hohlkörperwandungen aufweist.

Beispielsweise ist der Hohlkörper und/oder das Profil als Rohr, insbesondere als Vierkantrohr ausgebildet. Der Hohlkörper und das Profil bilden im zusammengesetzten Zustand vorteilhafterweise ein Mehrfach-Hohlprofilelement, einen Hohlkörper in einem Hohlkörper, bzw. ein Hohlprofilelement in einem Hohlprofilelement, damit ein sogenanntes Rohr-in-RohrSystem. Das Hohlprofilelement der Vertikalstütze ist vorzugsweise aus genau zwei Hohlkörpern, als sogenanntes Mehrfachhohlprofilelement gebildet. Auch das Hohlprofilelement der Querstrebe ist vorzugsweise aus genau zwei Hohlkörpern, als sogenanntes Mehrfachhohlprofilelement gebildet.

Vorteilhaft erweist sich auch, dass mehrere, insbesondere gleichartige Profile im Hohlprofilelement, insbesondere im Innenraum des Hohlkörpers vorhanden sind.

Durch die Anordnung mehrere Profile im Hohlprofilelement, bzw. im Hohlkörper des Hohlprofilelements können gezielt Bereiche des Hohlprofilelements verstärkt werden. Hierdurch kann die Stabilität des Hohlprofilelements vergleichsweise einfach gesteuert und insbesondere erhöht werden. Als vorteilhaft erweist sich auch, das Hohlprofilelement derart mit einem Profil zu verstärken, so dass eine Krafteinwirkung gezielt am Hohlprofilelement ab- bzw. weitergeleitet wird. Hierdurch ist es vorstellbar, die auf das Hohlprofil einwirkende Kraft gezielt auf einen sogenannten Opferbereich des Hohlprofilelements bzw. der Vorrichtung oder auf die Karosserie abzuleiten, wodurch die Sicherheit einer an der Vorrichtung gesicherten Person erhöht ist. Der Opferbereich ist vorteilhafterweise nachgebend ausgebildet, so dass eine einwirkende Energie im Crashfall, z.B. über eine definiert vorgebbare Verformung der Vorrichtung bzw. des Hohlprofilelements der Querstrebe und/oder des Hohlprofilelements der Vertikalstütze, durch die Vorrichtung absorbierbar ist.

Weiter wird vorgeschlagen, dass zwei sich insbesondere in ihrer Länge entlang einer Längsachse unterscheidende Profile im Hohlprofilelement, insbesondere im Innenraum des Hohlkörpers vorhanden sind. Denkbar ist weiterhin, dass die Profile sich auch in ihrer Form unterscheiden können. Hierdurch ist eine gezielte Krafteinleitung bzw. Kraftableitung im Crashfall möglich. Vorteilhafterweise ist durch das in den Hohlkörper eingeschobene Profil die Vorrichtung am Wirkbereich, an welchem das Profil vorhanden ist, derart verstärkt und stabilisiert, dass eine im Crashfall auf die Vorrichtung einwirkende Kraft bzw. Energie vom Wirkbereich ableitbar ist. Hierdurch ist eine Verformung oder eine Zerstörung, z.B. ein Bruch, der Vorrichtung am Wirkbereich verhindert.

Überdies ist es von Vorteil, dass das Hohlprofilelement ein Halteorgan umfasst, um das Profil gegenüber einer Positionsveränderung an einem Wirkbereich, insbesondere im Hohlkörper zu halten.

Das Halteorgan sichert vorteilhaft das Profil an einem Wirkbereich im Hohlkörper. Hierzu ist das Halteorgan z.B. als Anschlag ausgebildet. Vorteilhafterweise ist eine Größe z.B. eine Länge und/oder ein Durchmesser des Wirkbereichs größer als eine Größe des Profils, z.B. eine Länge und/oder ein Außendurchmesser des Profils. Hierdurch ist das Profil im Hohlkörper lagefixiert.

Das Halteorgan ist beispielsweise als Schweißpunkt am Hohlkörper vorhanden. Denkbar ist auch, dass das Halteorgan stiftartig ausgebildet ist und in Querrichtung zur Längsachse des Hohlkörpers am Hohlkörper angeordnet ist. Z.B. ist das Halteorgan durch Wandungen des Hohlkörpers geschoben. Vorstellbar ist weiterhin, dass das Halteorgan als Umbiegung, insbesondere eines Wandabschnitts des Hohlkörpers, am Hohlkörper vorhanden ist.

Bei einer weiteren Variante der Erfindung ist das Profil an einer Wirkposition im Hohlprofilelement, insbesondere im Hohlkörper befestigt.

Beispielsweise ist das Profil z.B. mittels einer Lochschweißung am Hohlkörper angeschweißt. Denkbar ist auch, dass das Profil mittels eines oder mehrere Halteorgane am Hohlkörper lagefixiert oder befestigt ist.

Von Vorteil ist ebenfalls, dass das Profil derart an einer Wirkposition am Wirkbereich im Hohlkörper vorhanden ist, dass eine Position des Profils, insbesondere innerhalb des Wirkbereichs, im Hohlkörper bei einer mechanischen Belastung von außen veränderbar ist.

Vorstellbar ist, dass das Halteorgan das Profil derart lagefixiert, sodass in einem Crashfall das Profil sich aus seiner Wirkposition wegbewegen kann und/oder dass in einem Crashfall das Profil innerhalb eines Wirkbereichs, insbesondere um seine Wirkposition positionsveränderbar vorhanden ist.

Denkbar ist, dass das Halteorgan mit einer Sollbruchstelle versehen ist, welche in einem Crashfall durch Einwirkung einer Kraft von außen auf die Vorrichtung nachgibt.

Das Profil ist an der Wirkposition z.B. mit dem Hohlkörper verklebt, vernietet, verschweißt, verschraubt oder fest verklemmt. Beispielsweise ist das Profil mittels einer Lochschweißung am Hohlkörper befestigt. Denkbar ist auch, dass das Profil mittels Anschlagelementen im Hohlkörper an der Wirkposition befestigt ist. Die Wirkposition ist bevorzugterweise innerhalb des Wirkbereichs vorhanden. Vorteilhafterweise ist das Profil derart innerhalb des Hohlkörpers befestigt, dass eine Geräuscherzeugung, z.B. ein Klappern, bspw. durch Aneinanderschlagen des Hohlkörpers und des Profils, vermieden ist.

Auch wird vorgeschlagen, dass der Wirkbereich derart am Hohlprofilelement, insbesondere am Hohlkörper vorhanden ist, dass ein Verformungsverhalten des Hohlprofilelements bei einer mechanischen Belastung von außen vorbestimmt ist.

In einer vorteilhaften Ausgestaltung der Erfindung ist das am Wirkbereich vorhandene Profil derart auf den Wirkbereich und/oder den Hohlkörper abgestimmt, dass ein Verformungsverhalten des Hohlprofilelements bei einer mechanischen Belastung von außen vorbestimmt ist.

Vorteilhafterweise ist das Hohlprofilelement derart mit einem Profil verstärkt, dass ein Verformungsverhalten des Hohlprofilelements außerhalb des Wirkbereichs des Profils vorbestimmt ist. Hierzu ist der Hohlkörper des Hohlprofilelements derart mit einem oder mehreren Profilen verstärkt, so dass eine Kraft derart geleitet wird, dass z.B. der Hohlkörper des Hohlprofilelements an einem oder mehreren sogenannten Opferbereichen des Hohlkörper im Crashfall gezielt und insbesondere definiert in Richtung und Wirkung nachgibt bzw. sich verformt.

Gemäß einem weiteren wesentlichen Aspekt der Erfindung ist die Vertikalstütze und/oder die Querstrebe in Längsrichtung betrachtet innerhalb eines Endabschnitts der Vertikalstütze und/oder der Querstrebe mit einer Materialausnehmung in einer Wand der Vertikalstütze und/oder der Querstrebe versehen vorzugsweise geschlitzt ausgebildet ist.

Vorzugsweise ist das Hohlprofilelement in Längsrichtung des Hohlprofilelements betrachtet innerhalb eines Endabschnitts des Hohlprofilelements mit einer Materialausnehmung in einer Wand des Hohlprofilelements versehen vorzugsweise geschlitzt ausgebildet. Der Opferbereich ist zum Beispiel schlitzartig ausgebildet.

Damit ist ein plastisches Verformungsverhalten der Vertikalstütze und/oder der Querstrebe bzw. des Hohlprofilelements in einem Belastungsfall beeinflussbar.

Die Materialaussparung kann mehrere voneinander getrennte Bereiche umfassen zum Beispiel Schlitze. Vorzugsweise ist ein oberer Endabschnitt der einen oder der zwei oder mehr Vertikalstützen mit einer Materialausnehmung in einer Wand des Hohlprofilelements versehen vorzugsweise geschlitzt ausgebildet. Besonders bevorzugt sind mehrere Schlitze in einem oberen Endabschnitt der Vertikalstützen vorhanden. Zusätzlich oder alternativ kann die Querstrebe in einem Endabschnitt oder vorzugsweise in beiden Endabschnitten mit einer Materialausnehmung in einer Wand des Hohlprofilelements versehen sein, vorzugsweise geschlitzt ausgebildet bzw. mit mehreren Schlitzen bzw. Aussparungen versehen sein.

Eine Materialaussparung in einer Wand des Hohlprofilelements bedeutet, dass in einer Wand eines Hohlkörpers die Materialaussparung vorhanden ist. Vorzugsweise erstreckt sich ein Schlitz durch eine Vorderseiten des Hohlprofilelements weiter nach hinten. Der Schlitz ist insbesondere zusammenhängend über z.B. circa eine halbe Tiefe des Hohlprofilelements.

Auch ist es von Vorteil, wenn das Hohlprofilelement in Längsrichtung des Hohlprofilelements betrachtet innerhalb eines Endabschnitts des Hohlprofilelements geschlitzt ausgebildet ist, wobei der geschlitzte Endabschnitt des Hohlprofilelements eine Länge zwischen 20 und 40 Prozent der Gesamtlänge des Hohlprofilelements ausmacht.

Es ist auch vom Vorteil, dass das geschlitzte Hohlprofilelement in einem Endabschnitt mehrere materialfreie Einschnitte aufweist. Die mehreren materialfreien Einschnitte sind vorzugsweise nicht miteinander verbunden. Damit kann gezielt und feinstufig eine gewünschte Verformung im Belastungsfall der Hohlprofilelemente vorgegeben werden.

Besonders bevorzugt weisen bei einer erfindungsgemäßen Vorrichtung mit genau zwei Vertikalstützen beide Vertikalstützen im jeweils oberen Endabschnitt, vorzugsweise innerhalb eines Viertels oder eines Drittels der Gesamtlänge der Vertikalstütze, mehrere in Längsrichtung der Vertikalstütze voneinander beabstandete bzw. voneinander getrennte Materialausnehmungen bzw. Schlitze auf. Vorzugsweise sind beide Vertikalstützen identisch mit Materialaussparungen versehen. Vorzugsweise sind in einer Vertikalstütze drei bis 8, bzw. genau 5 oder genau 7, insbesondere genau 6 Materialaussparungen bzw. Schlitze ausgebildet. Die Schlitze spannen jeweils parallele voneinander beabstandete Ebenen auf, welche winklig zur Längsachse der Vertikalstütze vorzugsweise rechtwinklig zur Längsachse verlaufen.

Eine vorteilhafte Ausbildung der Erfindung ergibt sich in diesem Zusammenhang dadurch, dass das Hohlprofilelement geschlitzt ist, womit in dem Hohlprofilelement wenigstens ein materialfreier Einschnitt gebildet ist, der sich winklig zur Längserstreckung des Hohlprofilelementes erstreckt.

Aufgrund der Materialausnehmungen bzw. der Schlitzung kann eine Person, welche mit dem an der Vorrichtung vorhandenen Personenrückhaltesystems gesichert ist, in einem Belastungsfall auf die Vorrichtung wie einem Aufprallunfall des Verkehrsmittels vor unerwünschten Verletzungen geschützt werden, indem die Grundhaltefunktion der Vorrichtung sicher erhalten bleibt bzw. die Vorrichtung nicht bricht oder ggf. sogar aus dem Bodenbereich des Verkehrsmittels herausgerissen wird. Denn mit den materialfreien Bereichen bzw. Schlitzen kann auf einfache Weise und systematisch beziehungsweise vorgebbar eine einzelne oder mehrere Soll-Verformungsstelle im Hohlprofilelement ausgebildet werden. Damit wird im Belastungsfall zwangsweise eine tolerierbare Verformung der Hohlprofile erzwungen, so dass dabei Energie umgewandelt wird und somit keine Energiespitze auftritt, die zum plötzlichen Versagen bzw. Brechen der Vorrichtung führt bzw. es ausgeschlossen ist, dass die Vorrichtung aus dem Bodenbereich des Fahrzeugs herausgerissen wird. Denn an den materialfreien Bereichen bzw. Schlitzen kommt es zu einer plastischen Verformung im geschlitzten Bereich des Hohlprofilelements, womit ausgeschlossen ist, dass der betreffende Bauteilabschnitt bricht. Damit findet eine Energieumwandlung in einem Belastungsfall wie einem Aufprallunfall des Verkehrsmittels in kontrollierter Weise statt, wobei die Verformung in einem vorgebbaren bzw. tolerierbaren Maß gehalten wird. Die Vorgabe ist abhängig von der Art bzw. Anzahl der materialfreien Bereiche bzw. Schlitze.

Die Schlitzrichtung liegt vorzugsweise entlang einer Ebene quer oder schräg zur Längsrichtung des Hohlprofilelements. Vorzugsweise wird die Schlitzung im Zustand der beiden miteinander längsseitig verbundenen Hohlkörper nachträglich spanabhebend im Hohlprofilelement eingebracht, beispielsweise durch Fräsen oder Sägen.

Es ist über dies vorteilhaft, dass eine Abmessung eines durch die Schlitzung am Hohlprofilelement gebildeten materialfreien Bereichs vorgebbar abgestimmt ist auf ein Verformungsverhalten des Hohlprofilelementes bei einer mechanischen Belastung. Damit kann das Hohlprofilelement gezielt auf eine im Praxisfall zu erwartende Belastung abgestimmt ausgebildet werden.

Überdies ist es vorteilhaft, wenn eine Abmessung des durch die Schlitzung im Hohlprofilelement gebildeten materialfreien Bereichs eine Länge, eine Breite und/oder eine Tiefe des materialfreien Bereichs ist.

Vorteilhafterweise ist die schlitzförmige Materialausnehmung insbesondere auf einer Vorderseite der Vertikalstütze durch einen Materialbereich unterbrochen. Vorzugsweise ist der Materialbereich ein originärer Materialbereich der Wand der Vertikalstütze. Der Materialbereich kann alternativ auch z.B. nachträglich als Schweißverbindung bzw. Schweißpunkt zwischen gegenüberliegenden Rändern der Materialausnehmung gebildet sein. Mit dem Materialbereich z.B. der Wand der Vertikalstütze, der vorzugsweise als Materialbrücke bzw. Materialsteg ausgebildet ist, kann eine ungewollte geringe Verformung der Vertikalstütze durch zum Belastungsfalls vergleichsweise geringe Belastung vermieden werden. Denn der Materialsteg der Wand der Vertikalstütze, welcher den Schlitz der Vertikalstütze an einer Stelle unterbricht, stabilisiert die Vertikalstütze geringfügig derart, dass erst dann eine plastische Verformung der Vertikalstütze erfolgt, wenn ein bestimmungsgemäßer Belastungsfalls auftritt, bei dem sich die Vertikalstütze aufgrund der schlitzförmigen Materialausnehmung bzw. aufgrund der Schlitzung plastisch verformen soll. Der Materialsteg stellt insbesondere vorteilhaft sicher, dass bei der Montage oder beim Transport der Vorrichtung an der Vertikalstütze wirkende Kräfte und Momente zu keiner vergleichsweise geringen Verbiegung der Vorrichtung führen. Im bestimmungsgemäßen Belastungsfall hingegen stellt der Materialsteg keinen relevanten Widerstand gegen eine bestimmungsgemäße bzw. stärkere plastische Verformung der Vertikalstütze bereit. Dabei verformt sich der Materialsteg plastisch, wie auch weitere Bereiche der Vertikalstütze im Nahbereich der Materialausnehmung auf gewünschte bzw. vorgebbare Weise.

Der Materialsteg trennt die schlitzförmige Materialausnehmung demgemäß in zwei Teilschlitzungen. Der Materialsteg ist z.B. auf der Vorderseite der Vertikalstütze mittig ausgebildet, jedoch über einen vergleichsweise geringen Teil der Gesamtbreite der Vorderseite. Der Materialsteg weist vorzugsweise eine Höhe in der Größenordnung der Schlitzhöhe auf, vorzugsweise ca. 1 bis 3 Millimeter. Ggf. kann nach dem Transport der Vorrichtung bzw. nach der Montage der Vorrichtung z.B. an das Verkehrsmittel der Materialsteg entfernbar ausgestaltet sein. Beispielsweise ist der Schweißpunkt mit einer Schleifscheibe durchtrennbar.

In einer weiteren Variante der Erfindung ist an der Vorrichtung ein Zusatzelement vorhanden, welches ausgebildet ist, dass ein Eingreifabschnitt des Zusatzelements passend in die Materialausnehmung der Vertikalstütze eingreift. Das Zusatzelement ist vorzugsweise lösbar an der Vertikalstütze anbringbar. Das Zusatzelement ist beispielsweise aus einem Kunststoffmaterial und z.B. platzsparend gestaltet, so dass das Zusatzelement außen oder innen lösbar an die Vertikalstütze ansteckbar ist. Dabei ist für eine Materialausnehmung bzw. vorzugsweise für sämtliche, insbesondere an der Vertikalstütze vorhandenen Materialausnehmungen jeweils ein abgestimmt ausgestalteter Eingreifabschnitt vorhanden. Hierdurch wird die Materialausnehmung statisch stabilisiert und damit die Vertikalstütze gegen ein Verformen gesichert.

Eine alternative bevorzugte Ausbildung der Erfindung zeichnet sich dadurch aus, dass ein Abstand zwischen zwei durch jeweils einen Schlitz im Hohlprofilelement gebildeten materialfreien Bereichs vorgebbar abgestimmt auf ein Verformungsverhalten des Hohlprofilelementes bei einer mechanischen Belastung. Ein Abstand zwischen zwei Schlitzen liegt vorzugsweise zwischen 10 und 60 Millimeter.

Schließlich ist es vorteilhaft, dass eine Auslegerstütze vorhanden ist, welche mit der Vertikalstütze und/oder der Querstrebe verbunden ist und ein Fußabschnitt der Auslegerstütze im Bodenbereich des Verkehrsmittels abstützbar ist, wobei die Auslegerstütze ein Hohlprofilelement umfasst, welches zwei längsseitig verbundene Hohlkörper umfasst, vorzugsweise gemäß dem Hohlprofilelement der Vertikalstütze und/oder der Querstrebe ausgebildet ist.

Die Erfindung betrifft außerdem eine Personensitzanordnung für ein Verkehrsmittel mit einer Vorrichtung gemäß einer der oben beschriebenen Ausbildungsform.

Des Weiteren erstreckt sich die Erfindung auf ein Verkehrsmittel mit einer Personensitzanordnung bzw. mit einer Vorrichtung in einer der oben diskutierten Ausgestaltungen.

### Beschreibung des Ausführungsbeispiels

Ein Ausführungsbeispiel wird anhand der nachstehenden schematischen Zeichnungen unter Angabe weiterer Einzelheiten und Vorteile näher erläutert

Es zeigen:
- Figur 1: eine seitliche Ansicht auf eine erfindungsgemäße Vorrichtung,
- Figur 2: eine Ansicht von vorne auf einen Schnitt durch die Vorrichtung nach Figur 1,
- Figur 3: eine Ansicht von vorne auf ein vergrößertes Detail des Schnitts nach Figur 2 und
- Figur 4: eine Ansicht von oben, parallel zu einer Längsachse einer Vertikalstütze auf einen Querschnitt der Vertikalstütze.

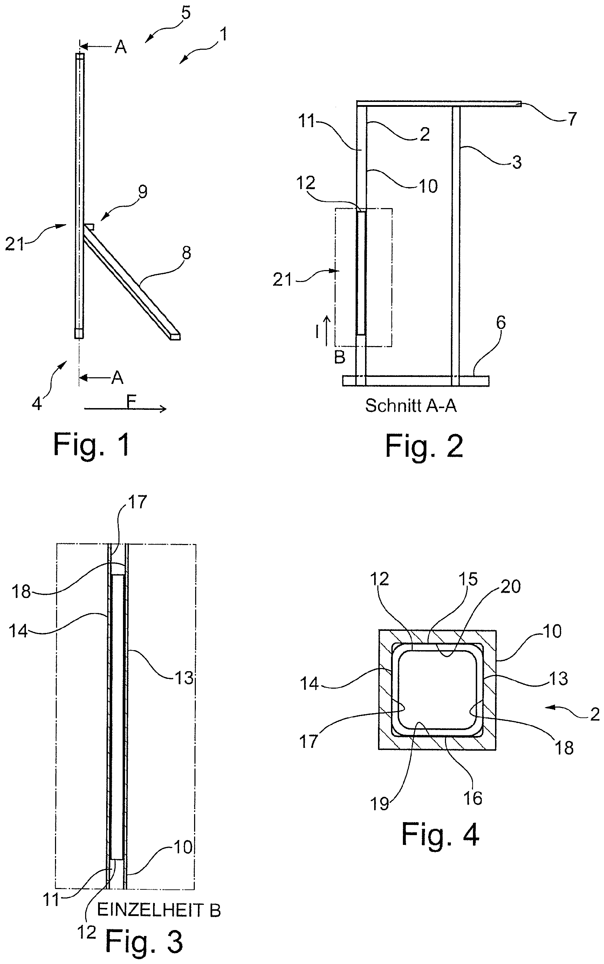

Eine erfindungsgemäße Vorrichtung 1 umfasst eine erste und eine zweite Vertikalstütze 2, 3. Die Vorrichtung 1 ist mit einem unteren Ende 4 zum Beispiel an einem Fahrzeugboden eines Fahrzeugs anordenbar (Figuren 1, 2).

Am unteren Ende 4 und/oder am gegenüberliegend angeordneten oberen Ende 5 kann eine Querstrebe 6, 7 rechtwinklig zu den Vertikalstützen 2, 3 vorhanden sein. Die Vertikalstützen 2, 3 sind im angeordneten Zustand am Fahrzeug vorteilhaft vertikal, senkrecht zum Fahrzeugboden vorhanden. Die Querstrebe 6, 7 sind im angeordneten Zustand am Fahrzeug vorteilhaft horizontal, parallel zum Fahrzeugboden vorhanden. Die Querstrebe 6, 7 sind beispielsweise dazu ausgebildet eine Rückhaltevorrichtung (nicht gezeigt) für einen Nutzer des Fahrzeugsitzes, welcher die Vorrichtung 1 umfasst, anzubringen. Die Rückhaltevorrichtung besteht beispielsweise aus einem 3-Punkt-Gurt-System.

Zusätzlich kann die Vorrichtung 1 eine Auslegerstütze 8 umfassen, welche die Vorrichtung 1 im angeordneten Zustand am Fahrzeug in eine Fahrtrichtung F, nach vorne abstützt. Hierzu ist die Auslegerstütze 8 beispielsweise in einem Winkelbereich zwischen 30° und 50° in Richtung unterem Ende 4 von zumindest einer Vertikalstütze 2 oder 3 abstehende vorhanden. Die Auslegerstütze 8 ist beispielsweise mit einem ersten Ende 9 in einem Bereich von ca. einem Drittel der Länge der Vertikalstütze 2, 3 an der Vertikalstütze 2, 3 befestigt, insbesondere angeschraubt und/oder angeschweißt.

In Figur 2 ist aus einer Sicht von vorne auf die Vorrichtung ein Querschnitt durch die Vorrichtung 1, insbesondere durch die Vertikalstreben 2, 3 dargestellt. Im Detail B der Figur 2 ist gezeigt, dass die Vertikalstütze 2 als Mehrfach-Hohlprofilelement ausgebildet ist. Die Vertikalstütze 2 besteht zum einen zum Beispiel aus einem Vierkantrohr 10, welches als Hohlprofilelement bzw. als Hohlkörper hohl ausgebildet ist. Das Vierkantrohr 10 besitzt somit einen Hohlraum 11 zur Aufnahme eines weiteren Profils 12, wobei das Profil 12 beispielsweise ebenfalls als Vierkantrohr vorhanden ist (Figur 3).

Das Profil 12 ist beispielsweise derart dimensioniert, sodass es entlang einer Längsachse l der Vertikalstütze 2 in die Vertikalstütze 2 eingeschoben werden kann. Vorteilhafterweise besitzt das Profil 12 eine Außenkontur, welche einer Innenkontur des Vierkantrohrs 10 entspricht, sodass das Profil 12 mit seinen Außenseiten 13 bis 16 direkt, insbesondere flächig, z.B. entlang der Längsachse l der Vertikalstütze 2 an Innenseiten 17 bis 20 des Vierkantrohrs 10 anliegt (Figur 4). Hierdurch ist die Vertikalstütze 2 gegenüber einer herkömmlichen Vertikalstütze vorteilhaft verstärkt.

Vorteilhafterweise ist die Vertikalstütze 2 in einem Wirkbereich 21 durch das Profil 12 verstärkt ausgebildet. Der Wirkbereich 21 erstreckt sich beispielsweise entlang der Längsachse L der Vertikalstütze um den Anbindungsbereich der Auslegerstütze 8. Hierdurch ist die Vertikalstütze 2 vorteilhaft an der in einem Crashfall physikalisch neuralgischen Stelle in Höhe etwa eines Drittels der Länge der Vertikalstütze 2 gegen ein Verformen verstärkt ausgebildet.

### Bezugszeichenliste

- 1: Vorrichtung
- 2, 3: Vertikalstütze
- 4: Ende
- 5: Ende
- 6, 7: Querstrebe
- 8: Auslegerstütze
- 9: Ende
- 10: Vierkantrohr
- 11: Hohlraum
- 12: Profil
- 13 - 16: Außenseite
- 17 - 20: Innenseite
- 21: Wirkbereich

## Patentansprüche

1. Vorrichtung (1) zur Anordnung eines Personenrückhaltesystems in einem Verkehrsmittel, um mit dem Personenrückhaltesystem eine in dem Verkehrsmittel sitzende Person zu sichern, wobei die Vorrichtung (1) eine Stützanordnung mit einer Vertikalstütze (2, 3) umfasst, die in einem Bodenbereich (4) des Verkehrsmittels aufrecht stehend fixierbar ist,
**dadurch gekennzeichnet, dass**
die Vertikalstütze (2, 3) als Mehrfach-Hohlprofilelement aufgebaut ist, wobei das Mehrfach-Hohlprofilelement über seine zumindest wesentliche Längserstreckung zwei miteinander längsseitig verbundene Hohlkörper (10, 12) umfasst.

2. Vorrichtung (1) nach dem Anspruch 1, **dadurch gekennzeichnet, dass** die Vertikalstütze (2, 3) als ein Hohlprofilelement ausgestaltet ist, wobei in einem Innenraum (11) eines Hohlkörpers (10) des Hohlprofilelements entlang einer Längserstreckung ein Profil (12) zur Verstärkung der Vertikalstütze (2, 3) eingeschoben und lagefixiert ist.

3. Vorrichtung (1) nach Anspruch 1, **dadurch gekennzeichnet, dass** der Hohlkörper (10) und das Profil (12) längsseitig miteinander verbunden sind.

4. Vorrichtung (1) nach einem der vorangegangenen Ansprüche,
**dadurch gekennzeichnet, dass** der Hohlkörper (10) und/oder das Profil (12) erste gegenüberliegende Hohlkörperwandungen (13-14, 17-18) und zweite gegenüberliegende Hohlkörperwandungen (15-16, 19-20) aufweist.

5. Vorrichtung (1) nach einem der vorangegangenen Ansprüche,
**dadurch gekennzeichnet, dass** mehrere, insbesondere gleichartige Profile (12) im Hohlprofilelement, insbesondere im Innenraum (11) des Hohlkörpers (10) vorhanden sind.

6. Vorrichtung (1) nach einem der vorangegangenen Ansprüche,
**dadurch gekennzeichnet, dass** zwei sich in ihrer Länge entlang einer Längsachse unterscheidende Profile im Hohlprofilelement, insbesondere im Innenraum (11) des Hohlkörpers (10) vorhanden sind.

7. Vorrichtung (1) nach einem der vorangegangenen Ansprüche,
**dadurch gekennzeichnet, dass** das Hohlprofilelement ein Halteorgan umfasst, um das Profil (12) gegenüber einer Positionsveränderung an einem Wirkbereich (21), insbesondere im Hohlkörper (10) zu halten.

8. Vorrichtung (1) nach einem der vorangegangenen Ansprüche,
**dadurch gekennzeichnet, dass** das Profil (12) derart an einer Wirkposition am Wirkbereich (21) im Hohlkörper (10) vorhanden ist, dass eine Position des Profils (12), insbesondere innerhalb des Wirkbereichs (12), im Hohlprofilelement, insbesondere im Hohlkörper (10) bei einer mechanischen Belastung von außen veränderbar ist.

9. Vorrichtung (1) nach einem der vorangegangenen Ansprüche,
**dadurch gekennzeichnet, dass** das Profil (12) an einer Wirkposition im Hohlprofilelement, insbesondere im Hohlkörper (10) befestigt ist.

10. Vorrichtung (1) nach einem der vorangegangenen Ansprüche,
**dadurch gekennzeichnet, dass** der Wirkbereich (21) derart am Hohlprofilelement, insbesondere am Hohlkörper (10) vorhanden ist, dass ein Verformungsverhalten des Hohlprofilelements bei einer mechanischen Belastung von außen vorbestimmt ist.

11. Vorrichtung (1) nach einem der vorangegangenen Ansprüche,
**dadurch gekennzeichnet, dass** das am Wirkbereich (21) vorhandene Profil (12) derart auf den Wirkbereich (21) und/oder den Hohlkörper (10) abgestimmt ist, dass ein Verformungsverhalten des Hohlprofilelements bei einer mechanischen Belastung von außen vorbestimmt ist.

12. Personensitzanordnung für ein Verkehrsmittel mit einer Vorrichtung (1) nach einem der vorangegangen Ansprüche.

13. Verkehrsmittel mit einer Personensitzanordnung nach Anspruch 11 und/oder mit einer Vorrichtung (1) nach einem der Ansprüche 1 bis 10.

## Claims

1. Device (1) for arranging a passenger restraint system in a means of transport, for securing a person sitting in the means of transport by means of the passenger restraint system, wherein the device (1) comprises a support arrangement with a vertical support (2, 3), which can be fixed upright in a floor area (4) of the means of transport, **characterised in that**
the vertical support (2, 3) is designed as a multiple-hollow profile element, wherein the multiple-hollow profile element at least over its main longitudinal extension comprises two hollow bodies (10, 12) connected to one another on their longitudinal sides.

2. Device (1) according to claim 1, **characterised in that** the vertical support (2, 3) is designed as a hollow profile element, wherein in an inner space (11) of a hollow body (10) of the hollow profile element in longitudinal extension a profile (12) is inserted and fixed in position for reinforcing the vertical support (2, 3).

3. Device (1) according to claim 1, **characterised in that** the hollow body (10) and the profile (12) are connected together on their longitudinal sides.

4. Device (1) according to any of the preceding claims, **characterised in that** the hollow body (10) and/or the profile (12) have first opposite hollow body walls (13-14, 17-18) and second opposite hollow body walls (15-16,19-20).

5. Device (1) according to any of the preceding claims, **characterised in that** a plurality of profiles (12), in particular similar profiles, are provided in the hollow profile element, in particular in the inner space (11) of the hollow body (10).

6. Device (1) according to any of the preceding claims, **characterised in that** two profiles, which differ in length along their longitudinal axis, are provided in the hollow profile element, in particular in the inner space (11) of the hollow body (10).

7. Device (1) according to any of the preceding claims, **characterised in that** the hollow profile element comprises a holding element for holding the profile (12) to prevent a change in position on an active area (21), in particular in the hollow body (10).

8. Device (1) according to any of the preceding claims, **characterised in that** the profile (12) is provided on an active position on the active area (21) in the hollow body (10) such that a position of the profile (12), in particular within the active area (21), in the hollow profile element, in particular in the hollow body (10), can be varied when under mechanical loading from the outside.

9. Device (1) according to any of the preceding claims, **characterised in that** the profile (12) is fixed on an active position in the hollow profile element, in particular in the hollow body (10).

10. Device (1) according to any of the preceding claims, **characterised in that** the active area (21) is provided on the hollow profile element, in particular on the hollow body (10), such that a deformation behaviour of the hollow profile element is predetermined when under mechanical loading from the outside.

11. Device (1) according to any of the preceding claims, **characterised in that** the profile (12) provided on the active area (21) is adjusted to the active area (21) and/or the hollow body (10) so as to predetermine a deformation behaviour of the hollow profile element when under mechanical loading from the outside.

12. Passenger seat arrangement for a means of transport with a device (1) according to any of the preceding claims.

13. Means of transport with a passenger seat arrangement according to claim 12 and/or with a device (1) according to any of claims 1 to 11.

## Revendications

1. Dispositif (1) pour le montage d'un système de retenue de passagers dans un moyen de transport afin de sécuriser une personne assise dans le moyen de transport avec le système de retenue de passagers, le dispositif (1) comprenant un dispositif support avec un support vertical (2, 3), qui peut être fixé en position verticale dans une zone de plancher (4) du moyen de transport, **caractérisé en ce que** le support vertical (2, 3) est réalisé sous la forme d'un élément à profilés creux multiples, l'élément à profilés creux multiples comprenant sur au moins une partie substantielle de son extension longitudinale deux corps creux (10, 12) reliés entre eux longitudinalement.

2. Dispositif (1) selon la revendication 1, **caractérisé en ce que** le support vertical (2, 3) est conçu sous la forme d'un élément de profilé creux, un profilé (12) étant inséré et fixé en position dans une cavité interne (11) d'un corps creux (10) de l'élément de profilé creux, le long d'une extension longitudinale, pour renforcer le support vertical (2, 3).

3. Dispositif (1) selon la revendication 1, **caractérisé en ce que** le corps creux (10) et le profilé (12) sont reliés entre eux longitudinalement.

4. Dispositif (1) selon l'une des revendications précédentes, **caractérisé en ce que** le corps creux (10) et/ou le profilé (12) présente des premières parois de corps creux opposées (13-14, 17-18) et des secondes parois de corps creux opposées (15-16, 19-20).

5. Dispositif (1) selon l'une des revendications précédentes, **caractérisé en ce que** plusieurs profilés (12), en particulier des profilés similaires, sont présents dans l'élément de profilé creux, en particulier dans la cavité interne (11) du corps creux (10).

6. Dispositif (1) selon l'une des revendications précédentes, **caractérisé en ce que** deux profilés de longueur différente le long d'un axe longitudinal sont présents dans l'élément de profilé creux, en particulier dans la cavité interne (11) du corps creux (10).

7. Dispositif (1) selon l'une des revendications précédentes, **caractérisé en ce que** l'élément de profilé creux comprend un organe de maintien afin de maintenir le profilé (12) au niveau d'une zone active (21), en particulier dans le corps creux (10), en l'empêchant de changer de position.

8. Dispositif (1) selon l'une des revendications précédentes, **caractérisé en ce que** le profilé (12) est présent dans une position active de la zone active (21) dans le corps creux (10) de telle sorte qu'une position du profilé (12), en particulier à l'intérieur de la zone active (21), dans l'élément de profilé creux, en particulier dans le corps creux (10), peut être modifiée en cas de sollicitation mécanique provenant de l'extérieur.

9. Dispositif (1) selon l'une des revendications précédentes, **caractérisé en ce que** le profilé (12) est fixé dans une position active dans l'élément de profilé creux, en particulier dans le corps creux (10).

10. Dispositif (1) selon l'une des revendications précédentes, **caractérisé en ce que** la zone active (21) est présente sur l'élément de profilé creux, en particulier sur le corps creux (10), de telle sorte qu'un comportement de déformation de l'élément de profilé creux est prédéterminé en cas de sollicitation mécanique provenant de l'extérieur.

11. Dispositif (1) selon l'une des revendications précédentes, **caractérisé en ce que** le profilé (12) présent au niveau de la zone active (21) est adapté à la zone active (21) et/ou au corps creux (10) de telle sorte qu'un comportement de déformation de l'élément de profilé creux est prédéterminé en cas de sollicitation mécanique provenant de l'extérieur.

12. Agencement de siège passager pour un moyen de transport avec un dispositif (1) selon l'une des revendications précédentes.

13. Moyen de transport avec un agencement de siège passager selon la revendication 12 et/ou avec un dispositif (1) selon l'une des revendications 1 à 11.
